# DEMANDE DE BREVET EUROPEEN

(11) **EP 0 593 380 A1**
(43) Date de publication de la demande: **20.04.1994**
(21) Numéro de dépôt: 93440087.0
(22) Date de dépôt: 18.10.1993
(51) Int. Cl.: H04L 12/28

(54) **Dispositif de communication interactif, notamment pour des applications en domotique**

(30) Priorité: 16.10.1992 FR 9212631
(71) Demandeur: I & T COM (Société Anonyme), F-57070 Metz (FR)
(72) Inventeur: Jean, Philippe, F-57000 Metz (FR); Flaender, Didier, F-57000 Metz (FR)
(74) Mandataire: Nuss, Pierre

(57) **Abrégé**

La présente invention a pour objet un dispositif de communication interactif, pour des applications en domotique.

Dispositif caractérisé en ce qu'il présente une structure hiérarchisée à deux niveaux, et en ce qu'il est principalement constitué, d'une part, par une pluralité de modules individuels (1) destinés chacun à la commande et au contrôle de fonctions domotiques au niveau d'un logement et comportant une unité modem (2) assurant une émission de signaux numériques à une fréquence de modulation (f1) et une réception de signaux numériques à au moins une fréquence de démodulation (f2, f2'), d'autre part, par au moins un module collectif (3) de commande, de contrôle et de gestion, affecté(s) chacun à un ensemble de logements et relié(s) aux modules individuels (1) correspondant au moyen d'un réseau câblé (4) de distribution locale, par l'intermédiaire d'une unité modem (5) présentant au moins une fréquence d'émission (f2, f2') et une fréquence de réception (f1) et, enfin, par un module central (6) de contrôle et de gestion relié à l'ensemble des modules collectifs (3) et aux différents réseaux câblés (4) de distribution locale grâce à un moyen (7) de transmission de signaux câblé ou non, par l'intermédiaire d'une unité modem (8) présentant une fréquence de réception (f1) et au moins deux fréquences d'émission (f2, f2', f3), chaque module collectif (3) étant, en outre, pourvu d'une seconde unité modem (9) présentant une fréquence d'émission (f1) et une fréquence de réception (f3) en vue de sa liaison avec le module central (6).

## Description

La présente invention concerne le domaine de l'automatisation et du contrôle à distance de différentes fonctions domotiques, et a pour objet un dispositif de communication interactif, notamment pour des applications en domotique.

Actuellement, différents types de systèmes de transmission de données, mettant en oeuvre des réseaux câblés existants ou des réseaux spécifiquement installés à cet effet, sont déjà connus et permettent la commande et le contrôle à distance automatisés de certaines fonctions domotiques.

Ainsi, on connaît une installation à réseau filaire de distribution de programmes et de communication numérique comportant une station de tête réceptionnant les signaux hertziens de télévision captés par une antenne, un ou des moyens de gestion pourvus de modems et connectés au réseau de distribution de signaux audiovisuels et des terminaux de communication disposés dans les différents sites et pourvus de modems identiques à ceux équipant les moyens de gestion.

De plus, cette installation nécessite pour son fonctionnement la présence d'un dispositif de transposition des signaux afin de permettre l'échange de signaux entre moyens de gestion et terminaux.

Or, la constitution arborescente interconnectée de ladite installation, dont la structure à un seul niveau devient rapidement très complexe pour un nombre croissant de terminaux, associée à l'obligation d'un passage des signaux échangés par le dispositif de transposition, entraînent la mise en oeuvre d'un grand nombre de dispositifs d'amplification et une transmission très peu performante et de faible débit uniquement.

En outre, le bruit associé aux signaux est également transposé et amplifié et les signaux échangés sont soumis à des phénomènes de réverbération au moment de leur transposition et renvoyés sur l'ensemble du réseau, d'où résulte par conséquent une transmission de qualité relativement mauvaise et peu fiable, nécessitant des contrôles redondants.

Par ailleurs, on connaît également des installations de domotique sous la forme d'un réseau câblé spécifique, à un seul niveau, reliant une unité de gestion centrale à plusieurs unités de commande intermédiaires, ladite unité de gestion centrale étant connectée à un système de surveillance à distance par l'intermédiaire du réseau téléphonique commuté.

Néanmoins, les possibilités d'embranchements sont relativement limitées dans ce type d'installations et lesdites installations sont spécifiquement adaptées à une connexion par le réseau téléphonique commuté.

La présente invention a notamment pour but de pallier l'ensemble des inconvénients précités.

A cet effet, elle a pour objet un dispositif de communication interactif, notamment pour des applications en domotique, utilisant un ou plusieurs réseaux de transmission et/ou de distribution du type audiovisuel, téléphonique ou analogue pour le transfert de signaux numériques, caractérisé en ce qu'il présente une structure hiérarchisée à deux niveaux, et en ce qu'il est principalement constitué, d'une part, par une pluralité de modules individuels destinés chacun à la commande et au contrôle de fonctions domotiques au niveau d'un logement et comportant une unité modem assurant une émission de signaux numériques à une fréquence de modulation f1 et une réception de signaux numériques à au moins une fréquence de démodulation f2, f2', d'autre part, par au moins un module collectif de commande, de contrôle et de gestion, affecté(s) chacun à un ensemble de logements et relié(s) aux modules individuels correspondant au moyen d'un réseau câblé de distribution locale, par l'intermédiaire d'une unité modem présentant au moins une fréquence d'émission f2, f2' et une fréquence de réception f1 et, enfin, par un module central de contrôle et de gestion relié à l'ensemble des modules collectifs et aux différents réseaux câblés de distribution locale grâce à un moyen de transmission de signaux câblé ou non, par l'intermédiaire d'une unité modem présentant une fréquence de réception f1 et au moins deux fréquences d'émission f2, f2', f3, chaque module collectif étant, en outre, pourvu d'une seconde unité modem présentant une fréquence d'émission f1 et une fréquence de réception f3 en vue de sa liaison avec le module central.

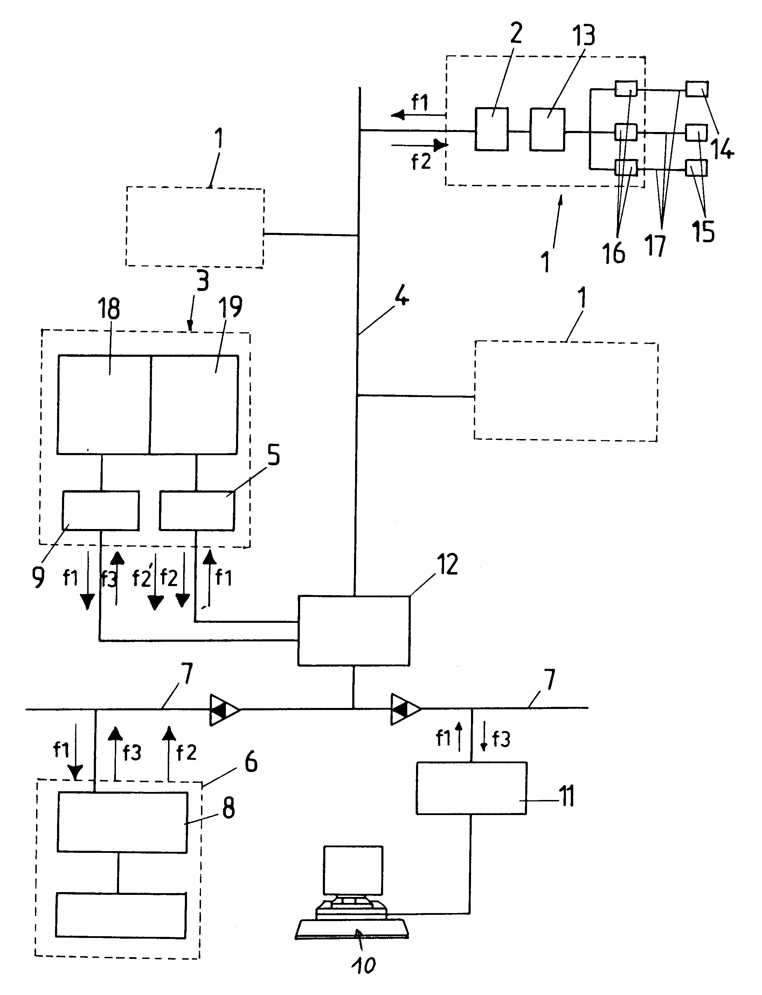

L'invention sera mieux comprise grâce à la description ci-après, qui se rapporte à un mode de réalisation préféré, donné à titre d'exemple non limitatif, et expliqué avec référence au dessin schématique annexé, dont la figure unique est un schéma de principe partiel du dispositif de communication interactif selon l'invention.

Conformément à l'invention et comme le montre la figure du dessin annexé, le dispositif de communication interactif présente une structure hiérarchisée à deux niveaux et est principalement constitué, d'une part, par une pluralité de modules individuels 1 destinés chacun à la commande et au contrôle de fonctions domotiques au niveau d'un logement et comportant une unité modem 2 assurant une émission de signaux numériques à une fréquence de modulation f1 et une réception de signaux numériques à au moins une fréquence de démodulation f2, f2', d'autre part, par au moins un module collectif 3 de commande, de contrôle et de gestion, affecté(s) chacun à un ensemble de logements et relié(s) aux modules individuels 1 correspondant au moyen d'un réseau câblé ou filaire 4 de distribution locale, par l'intermédiaire d'une unité modem 5 présentant au moins une fréquence d'émission f2, f2' et une fréquence de réception f1 et, enfin, par un module central 6 de contrôle et de gestion relié à l'ensemble des modules collectifs 3 et aux différents réseaux câblés 4 de distribution locale grâce à un moyen 7 de transmission de signaux câblé ou non, par l'intermédiaire d'une unité modem 8 présentant une fréquence de réception f1 et au moins deux fréquences d'émission f2, f2', f3, chaque module collectif 3 étant, en outre, pourvu d'une seconde unité modem 9 présentant une fréquence d'émission f1 et une fréquence de réception f3 en vue de sa liaison avec le module central 6.

Le réseau câblé 4 de distribution locale est préférentiellement constitué, pour chaque ensemble de logements, par le réseau coaxial de distribution audiovisuelle de l'ensemble de logements considéré, le moyen 7 de transmission de signaux pouvant correspondre à un réseau câblé de distribution du type audiovisuel, téléphonique ou encore spécialisé, tels que, par exemple, des lignes de transmission numérique à débit élevé.

Les modules individuels 1 sont par conséquent connectés au niveau des différents points de branchement du réseau audiovisuel (prises d'abonnés), les fréquences de modulation et de démodulation f1, f2 et f2' étant choisies dans les plages de fréquences de transmission non encore occupées.

Selon une caractéristique de l'invention, le dispositif de communication interactif peut également comporter un poste de gestion 10 décentralisé pouvant être relié au moyen 7 de transmission de signaux par l'intermédiaire d'une unité modem 11 présentant une fréquence d'émission f1 et une fréquence de réception f3, en vue de l'établissement d'une communication avec le module central 6, ce dernier assurant la communication entre les modules collectifs 3 et ledit poste de gestion 10, ce dernier pouvant se présenter sous la forme d'un poste informatique à clavier et écran.

Les prestataires ou gestionnaires de services liés au dispositif de communication interactif pourront, par conséquent, intervenir à tout moment en vue de relever des informations spécifiques, de répondre à des signaux d'alarme et de contrôler ou de modifier le fonctionnement d'un ou de plusieurs modules 1, 3 ou 6 ou la configuration de l'ensemble du dispositif.

Conformément à une autre caractéristique de l'invention, le dispositif de communication interactif comporte , au niveau de chaque ensemble de logements, un module de connexion 12 assurant l'interfaçage entre le réseau câblé 4 de distribution locale et le moyen 7 de transmission de signaux, éventuellement de types différents, soit par l'intermédiaire du module collectif 3 considéré, soit en établissant une liaison directe entre les deux niveaux du dispositif de communication, ce suite à une requête correspondante du module central 6, les deux niveaux dudit dispositif de communication présentant des protocoles de dialogue entre modules 1, 3 et 3, 6 identiques.

La structure hiérarchisée à deux niveaux indépendants du dispositif de communication interactif pourra, par conséquent, être remplacée par une structure à accès direct entre les modules individuels 1 et le module central 6, ce qui permettra d'effectuer des relevés à distance d'informations de manière décentralisée, d'opérer une reconfiguration d'une partie ou de l'ensemble de la structure du premier niveau du dispositif de communication, de reprogrammer un ou plusieurs modules individuels 1 ou encore de superviser et de vérifier certaines alarmes de fonctionnement d'un ensemble de modules individuels 1.

La connexion entre le module central 6 et un ou plusieurs modules individuels 1 pourra également être établie par l'intermédiaire du module collectif 3 notamment lorsque l'initiative de la connexion provient d'un ou de plusieurs modules individuels 1.

Comme le montre également la figure des dessins annexés, chaque module individuel 1 est composé, d'une part, d'une unité de traitement 13 à mémoire, commandant et contrôlant l'application des instructions fournies par le module collectif 3 ou le module central 6 au moyen de mécanismes d'actionnement 14 et stockant les informations recueillies par l'intermédiaire de moyens 15 capteurs ou détecteurs, le cas échéant à mémoire, d'autre part, d'une ou de plusieurs interfaces 16 assurant l'adaptation et la conversion des signaux informatifs entre l'unité de traitement 13 et les lignes de transmission 17, de natures diverses, aboutissant aux différents moyens 15 capteurs ou détecteurs ou mécanismes d'actionnement 14, et, enfin, de l'unité modem 2 munie, soit d'un démodulateur présentant deux fréquences de démodulation f2 et f2' pouvant être sélectionnées, soit de deux démodulateurs accordés chacun à une fréquence de démodulation f2 ou f2' donnée.

L'unité modem 2 pourra, avantageusement, comporter un modulateur numérique, par exemple de type FSK ou CPFSK assurant l'émission de données à un débit de 19,2 kb/s à la fréquence f1 et deux des modulateurs numériques, également par exemple de type FSK ou CPFSK assurant la réception des données respectivement à la fréquence f2 avec un débit de 19,2 kb/s et à la fréquence f2' avec un débit de 64 kb/s.

Cette deuxième fréquence de transmission f2', pour laquelle le débit de transfert de données est nettement plus élevé que celui utilisé pour la fréquence f2, permettra, par conséquent, le transfert du module collectif 3 vers les modules individuels 1 de trames de données complexes tels que des fichiers d'informations, des fichiers logiciels ou encore des images numériques comprimées.

Les modules individuels 1 sont, en permanence, à l'écoute des messages émis par le module collectif 3 auquel ils sont connectés et réémettre ou non eux-mêmes des messages vers le module collectif 3, en fonction, notamment, des messages antérieurs reçus et du mode de fonctionnement qui leur est attribué par l'organisation du dispositif de communication interactif ou suite à une reconfiguration de ce dernier.

Selon une autre caractéristique de l'invention, représentée également à la figure du dessin annexé, chaque module collectif 3 est composé, d'une part, d'une unité de traitement 18 à mémoire, commandant et contrôlant l'application d'instructions programmées initialement ou fournies par le module central 6 au niveau des modules individuels 1 dépendants et stockant les informations délivrées par ces derniers soumis à des interrogations périodiquement répétées, d'autre part, d'une unité 19 de gestion des dialogues entre ledit module collectif 3 et lesdits modules individuels 1 et, enfin, de l'unité modem 9 assurant la liaison avec le module central 6 et de l'unité modem 5 assurant la liaison avec les modules individuels 1 dépendants, cette unité modem 5 comportant deux modulateurs fonctionnant à des fréquences différentes f2 et f2', les débits de transmission de données aux fréquences f1 , f2 et f2' étant identiques à ceux utilisés au niveau des modules individuels 1.

L'unité de traitement 13 des modules collectifs 3 pourra comporter avantageusement au moins deux circuits à microprocesseur, dont l'un assure le contrôle du dialogue et du transfert d'informations entre ledit boîtier collectif 3 et les modules individuels 1 dépendants et dont l'autre assure la mise en oeuvre, le contrôle et la gestion des différentes fonctions domotiques devant être accomplies au niveau des différents modules individuels 1.

Par conséquent, ledit boîtier collectif 3 remplira principalement trois fonctions, à savoir, d'une part, le contrôle de tous les échanges réalisés avec les modules individuels 1, et, le cas échéant, le module central 6, d'autre part, la gestion d'applications locales et, enfin, l'interfaçage, le cas échéant, entre les deux niveaux réseaux câblés 4-moyens 7 de transmission du dispositif de communication.

Conformément à une caractéristique de l'invention, chaque module individuel 1 peut être identifié par une adresse personnelle et une ou plusieurs adresses de groupe, permettant au module collectif 3 d'échanger des informations, à une fréquence f1 ou f2, de manière séparée avec chaque module individuel 1 ou de manière simultanée avec plusieurs, voire l'ensemble, des modules individuels 1, des collisions éventuelles pouvant résulter d'échanges simultanés étant traitées entre le module collectif 3 et les modules individuels 1 concernés à la fréquence f'2.

Cette disposition permet, par conséquent, de mettre en oeuvre au moins deux modes de communication entre le module collectif 3 et ses modules individuels 1 dépendants, à savoir un échange entre un module collectif 3 et un module individuel 1 selon une organisation "maître (module collectif 3)-esclave (module individuel 1)" ou un échange entre le module collectif 3 et une pluralité de modules individuels 1, notamment dans le cas d'une interrogation générale de l'ensemble des modules 1 suivie d'autant de réponses convergeant vers le module collectif 3 considéré.

A titre d'exemple, on indiquera ci-après des plages de fréquences ainsi que des valeurs pouvant être utilisées pour les différentes fréquences d'émission et/ou de réception f1, f2, f2' et f3:
- f1:: 10 MHz - 30 MHz, avantageusement 29 MHz;
- f2:: 50 MHz - 80 MHz, avantageusement 70 MHz;
- f2':: 50 MHz - 80 MHz, avantageusement 60 MHz;
- f3 :: 50 MHz - 80 MHz, avantageusement 55 MHz.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

## Revendications

1. Dispositif de communication interactif, notamment pour des applications en domotique, utilisant un ou plusieurs réseaux de transmission et/ou de distribution du type audiovisuel, téléphonique ou analogue pour le transfert de signaux numériques, caractérisé en ce qu'il présente une structure hiérarchisée à deux niveaux, et en ce qu'il est principalement constitué, d'une part, par une pluralité de modules individuels (1) destinés chacun à la commande et au contrôle de fonctions domotiques au niveau d'un logement et comportant une unité modem (2) assurant une émission de signaux numériques à une fréquence de modulation (f1) et une réception de signaux numériques à au moins une fréquence de démodulation (f2, f2'), d'autre part, par au moins un module collectif (3) de commande, de contrôle et de gestion, affecté(s) chacun à un ensemble de logements et relié(s) aux modules individuels (1) correspondant au moyen d'un réseau câblé (4) de distribution locale, par l'intermédiaire d'une unité modem (5) présentant au moins une fréquence d'émission (f2, f2') et une fréquence de réception (f1) et, enfin, par un module central (6) de contrôle et de gestion relié à l'ensemble des modules collectifs (3) et aux différents réseaux câblés (4) de distribution locale grâce à un moyen (7) de transmission de signaux câblé ou non, par l'intermédiaire d'une unité modem (8) présentant une fréquence de réception (f1) et au moins deux fréquences d'émission (f2, f2', f3), chaque module collectif (3) étant, en outre, pourvu d'une seconde unité modem (9) présentant une fréquence d'émission (f1) et une fréquence de réception (f3) en vue de sa liaison avec le module central (6).

2. Dispositif selon la revendication 1, caractérisé en ce que le réseau câblé (4) de distribution locale est constitué, pour chaque ensemble de logements, par le réseau coaxial de distribution audiovisuelle de l'ensemble de logements considéré, le moyen (7) de transmission de signaux pouvant correspondre à un réseau câblé de distribution du type audiovisuel, téléphonique ou encore spécialisé.

3. Dispositif selon l'une quelconque des revendications 1 et 2, caractérisé en ce qu'il comporte également un poste de gestion (10) décentralisé pouvant être relié au moyen (7) de transmission de signaux par l'intermédiaire d'une unité modem (11) présentant une fréquence d'émission (f1) et une fréquence de réception (f3), en vue de l'établissement d'une communication avec le module central (6).

4. Dispositif selon l'une quelconque des revendications 1 à 3, caractérisé en ce qu'il comporte, au niveau de chaque ensemble de logements, un module de connexion (12) assurant l'interfaçage entre le réseau câblé (4) de distribution locale et le moyen (7) de transmission de signaux, éventuellement de types différents, soit par l'intermédiaire du module collectif (3) considéré, soit en établissant une liaison directe entre les deux niveaux du dispositif de communication, ce suite à une requête correspondante du module central (6), les deux niveaux dudit dispositif de communication présentant des protocoles de dialogue entre modules (1, 3 et 3, 6) identiques.

5. Dispositif selon l'une quelconque des revendications 1 à 4, caractérisé en ce que chaque module individuel (1) est compose, d'une part, d'une unité de traitement (13) à mémoire, commandant et contrôlant l'application des instructions fournies par le module collectif (3) ou le module central (6) au moyen de mécanismes d'actionnement (14) et stockant les informations recueillies par l'intermédiaire de moyens (15) capteurs ou détecteurs, le cas échéant à mémoire, d'autre part, d'une ou de plusieurs interfaces (16) assurant l'adaptation et la conversion des signaux informatifs entre l'unité de traitement (13) et les lignes de transmission (17), de natures diverses, aboutissant aux différents moyens (15) capteurs ou détecteurs ou mécanismes d'actionnement (14), et, enfin, de l'unité modem (2) munie, soit d'un démodulateur présentant deux fréquences de démodulation (f2 et f2') pouvant être sélectionnées, soit de deux démodulateurs accordés chacun à une fréquence de démodulation (f2 ou f2') donnée.

6. Dispositif selon l'une quelconque des revendications 1 à 5, caractérisé en ce que le module collectif (3) est composé, d'une part, d'une unité de traitement (18) à mémoire, commandant et contrôlant l'application d'instructions programmées initialement ou fournies par le module central (6) au niveau des modules individuels (1) dépendants et stockant les informations délivrées par ces derniers soumis à des interrogations périodiquement répétées, d'autre part, d'une unité (19) de gestion des dialogues entre ledit module collectif (3) et lesdits modules individuels (1) et, enfin, de l'unité modem (9) assurant la liaison avec le module central (6) et de l'unité modem (5) assurant la liaison avec les modules individuels (1) dépendants, cette unité modem (5) comportant deux modulateurs fonctionnant à des fréquences différentes (f2 et f2').

7. Dispositif selon l'une quelconque des revendications 1 à 6, caractérisé en ce que le débit de transmission de données à la fréquence (f2') est nettement plus élevé que celui mis en oeuvre à la fréquence (f2).

8. Dispositif selon l'une quelconque des revendications 6 et 7, caractérisé en ce que chaque module individuel (1) est identifié par une adresse personnelle et une ou plusieurs adresses de groupe, permettant au module collectif (3) d'échanger des informations, à une fréquence (f1 ou f2), de manière séparée avec chaque module individuel (1) ou de manière simultanée avec plusieurs, voire l'ensemble, des modules individuels (1), des collisions éventuelles pouvant résulter d'échanges simultanés étant traitées entre le module collectif (3) et les modules individuels (1) concernés à la fréquence (f'2).
